(19) Europäisches Patentamt
European Patent Office
Office européen des brevets

(11) **EP 2 961 243 B1**

(12) **EUROPEAN PATENT SPECIFICATION**

(45) Date of publication and mention
of the grant of the patent:
**27.12.2017  Bulletin 2017/52**

(51) Int Cl.:
*H05B 3/00* *(2006.01)*          *G02B 5/28* *(2006.01)*
*H01K 1/24* *(2006.01)*          *H01K 1/32* *(2006.01)*

(21) Application number: **15152355.2**

(22) Date of filing: **23.01.2015**

(54) **Heater**

Heizer

Dispositif de chauffage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2014  JP 2014130564**

(43) Date of publication of application:
**30.12.2015  Bulletin 2015/53**

(73) Proprietor: **Toshiba Lighting & Technology
Corporation
Yokosuka-shi
Kanagawa 237-8510 (JP)**

(72) Inventor: **Takatsuka, Masaaki
Kanagawa, 237-8510 (JP)**

(74) Representative: **Awapatent AB
Junkersgatan 1
582 35 Linköping (SE)**

(56) References cited:
**EP-A1- 2 924 713          JP-A- S63 266 792
JP-A- 2003 059 461     JP-A- 2005 019 317
US-A- 3 538 374**

## Description

FIELD

Embodiments described herein relate generally to a heater.

BACKGROUND

Heretofore, a heater having a combined function of space heating in a store or the like and lighting is used.

A heater for space heating is used mainly as a heat source, and a light in a visible light region is emitted to a space when heat is generated. Here, the heater for space heating is required to have a function as a heat source, but depending on the environment where the heater is used, the heater is required to be glare-free, that is, required to have a so-called anti-glare property.

An object of the invention is to provide a heater having an improved anti-glare property. This object is achieved with a heater, comprising: a bulb including a cylindrical section;a filament disposed in the interior of the bulb along the tube axis; a gas filled in the interior of the bulb; and a multilayer film formed on the outer surface of the bulb, and having an average visible light transmittance in the wavelength range of 380 nm to 780 nm of 24% or less, wherein the filament includes a coil wound spirally, except for a flower-winding coil, and an anchor supporting the coil against the inner wall of the bulb, the ratio $R1/R2$ of the outer diameter R1 of the coil to the outer diameter R2 of the anchor satisfies the following formula: $0.33 < R1/R2 \leq 0.55$, and the ratio $L1/L2$ of the wire length L1 of the coil when the coil is unwound into a linear form to the effective light emission length L2 of the cylindrical section in the tube axis direction satisfies the following formula: $13.0 < L1/L2 \leq 20.1$.

BRIEF DESCRIPTION OF THE DRAWINGS

FIG. 1 is a front view showing a heater according to an embodiment.
FIG. 2 is a cross-sectional view showing a heater according to an embodiment.
FIG. 3 is a front view showing a bulb.
FIG. 4 is a front view showing a filament.
FIG. 5 is a view showing a process for producing a heater according to an embodiment.
FIG. 6 is a view showing a process for producing a heater according to an embodiment.
FIG. 7 is a view showing a process for producing a heater according to an embodiment.
FIG. 8 is a view showing a process for producing a heater according to an embodiment.
FIG. 9 is an explanatory view showing electrical characteristics of a heater.

FIG. 10 is an explanatory view showing comparison of illuminance.
FIG. 11 is an explanatory view showing comparison of illuminance.

DETAILED DESCRIPTION

A heater 1 according to an embodiment described below includes a bulb 2, a filament 3, a gas 4, and a multilayer film 5. The filament 3 is disposed in an interior 2a of the bulb 2 along the tube axis. The filament 3 includes a coil 31 and an anchor 34. The coil 31 is wound spirally. The anchor 34 supports the coil 31 against an inner wall 2c of the bulb 2. The gas 4 is filled in the interior 2a of the bulb 2. The multilayer film 5 is formed on an outer surface 2b of the bulb 2. The multilayer film 5 has an average visible light transmittance in the wavelength range of 380 nm to 780 nm of 24% or less. The ratio $R1/R2$ of the outer diameter R1 of the coil 31 to the outer diameter R2 of the anchor 34 satisfies the following formula: $0.33 \leq R1/R2 \leq 0.55$.

The heater 1 according to the embodiment described below includes a bulb 2, a filament 3, a gas 4, and a multilayer film 5. The filament 3 is disposed in an interior 2a of the bulb 2 along the tube axis. The filament 3 includes a coil 31 and an anchor 34. The coil 31 is wound spirally. The anchor 34 supports the coil 31 against an inner wall 2c of the bulb 2. The gas 4 is filled in the interior 2a of the bulb 2. The multilayer film 5 is formed on an outer surface 2b of the bulb 2. The multilayer film 5 has an average visible light transmittance in the wavelength range of 380 nm to 780 nm of 24% or less. The ratio $L1/L2$ of the wire length L1 of the coil 31 to the effective light emission length L2 of the bulb 2 satisfies the following formula: $0.33 \leq L1/L2 \leq 20.1$.

The heater 1 according to the embodiment described below includes a bulb 2, a filament 3, a gas 4, and a multilayer film 5. The filament 3 is disposed in an interior 2a of the bulb 2 along the tube axis. The filament 3 includes a coil 31 and an anchor 34. The coil 31 is wound spirally. The anchor 34 supports the coil 31 against an inner wall 2c of the bulb 2. The gas 4 is filled in the interior 2a of the bulb 2. The multilayer film 5 is formed on an outer surface 2b of the bulb 2. The average visible light transmittance in the wavelength range of 380 nm to 780 nm of the bulb 2 and the multilayer film 5 formed on the outer surface 2b of the bulb 2 in combination is 22% or less. The ratio $R1/R2$ of the outer diameter R1 of the coil 31 to the outer diameter R2 of the anchor 34 satisfies the following formula: $0.33 \leq R1/R2 \leq 0.55$.

The heater 1 according to the embodiment described below includes a bulb 2, a filament 3, a gas 4, and a multilayer film 5. The filament 3 is disposed in an interior 2a of the bulb 2 along the tube axis. The filament 3 includes a coil 31 and an anchor 34. The coil 31 is wound spirally. The anchor 34 supports the coil 31 against an inner wall 2c of the bulb 2. The gas 4 is filled in the interior 2a of the bulb 2. The multilayer film 5 is formed on an outer surface 2b of the bulb 2. The average visible light transmittance in the wavelength range of 380 nm to 780 nm of the bulb 2 and the multilayer film 5 formed on the outer surface 2b of the bulb 2 in combination is 22% or less. The ratio L1/L2 of the wire length L1 of the coil 31 to the effective light emission length L2 of the bulb 2 satisfies the following formula: $0.33 \leq L1/L2 \leq 20.1$.

In the heater 1 according to the embodiment described below, the bulb 2 includes a dimple 25 protruding toward the interior 2a on the outer surface 2b of the bulb 2.

In the heater 1 according to the embodiment described below, the anchor 34 is formed into an arc shape along the inner wall 2c of the bulb 2 when seen in the tube axis direction, and a plurality of anchors are provided in the tube axis direction so as to maintain one or more predetermined pitches and support the coil 31 so that the coil 31 is disposed substantially at the center of the interior 2a of the bulb 2.

Embodiments

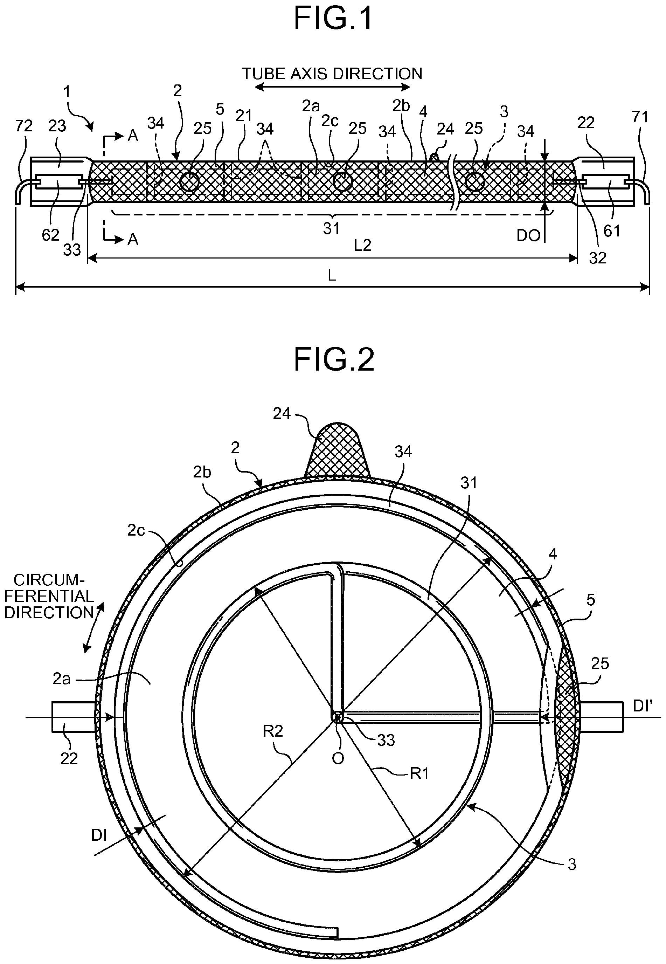

Embodiments will be described with reference to FIGS. 1 and 2. FIG. 1 is a front view showing a heater according to the embodiment. FIG. 2 is a cross-sectional view showing the heater according to the embodiment. Incidentally, FIG. 1 is a view in which a part of the heater in the tube axis direction is omitted. FIG. 2 is a cross-sectional view taken along the line A-A of FIG. 1.

The heater according to this embodiment provides heat to an object or a space to be heated, and as an example, a case where the heater is used as a space heater in a store or the like will be described. As shown in FIG. 1, the heater 1 is configured to include a bulb 2, a filament 3, a gas 4, a multilayer film 5, metal foils 61 and 62, and outer leads 71 and 72.

The bulb 2 is configured to include a cylindrical section 21, seal sections 22 and 23, a chip 24, and a dimple 25. The bulb 2 is formed from, for example, quartz glass, and is transparent and colorless, and is a long object in which the total length L is longer than the tube diameter DO. The bulb 2 preferably has a bulb wall loading of 21.3 (W/cm$^2$) or less. If the bulb wall loading exceeds 21.3 (W/cm$^2$), for example, the possibility of fusion of the filament 3 increases. Further, the bulb temperature (°C) increases, so that the bulb 2 is deformed or the durability of the bulb 2 is lowered.

In the cylindrical section 21, an interior 2a is formed as an inner space, and the filament 3 is disposed in the interior 2a.

The seal sections 22 and 23 are disposed at both ends of the cylindrical section 21 in the tube axis direction, respectively. The seal sections 22 and 23 are sealing members and seal the cylindrical section 21. The seal sections 22 and 23 in this embodiment are formed into a plate shape by a pinch seal. Incidentally, the seal sections 22 and 23 may be formed into a cylindrical shape by a shrink seal.

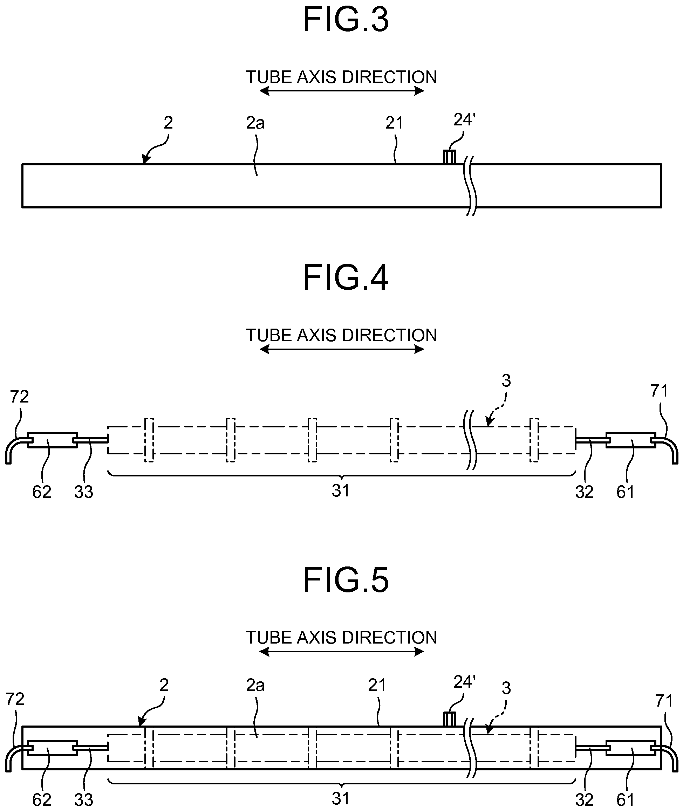

The chip 24 is a burnt trace of an exhaust tube 24' (see FIG. 3) provided for evacuation of the interior 2a and enclosure of the gas 4 when the heater 1 is produced. The chip 24 is closed when the heater 1 is completed.

As shown in FIG. 2, the dimple 25 protrudes toward the interior 2a of the bulb 2 on an outer surface 2b of the bulb 2. The inner diameter DI' of the bulb 2 at a position where the dimple 25 is formed is smaller than the inner diameter DI of the bulb 2 at a position where the dimple 25 is not formed. That is, at a position where the dimple 25 is formed, a gap between an inner wall 2c of the bulb 2 and the filament 3 becomes small. Therefore, the rotation in the circumferential direction of the filament 3 with respect to the bulb 2 or the movement thereof in the tube axis direction can be regulated, and thus, the formation of a dense portion and a sparse portion of the filament 3 in the tube axis direction can be prevented. Accordingly, the unevenness of the visible light amount and the infrared light amount in the tube axis direction of the heater 1 can be prevented. Incidentally, at least one dimple 25 may be formed, however, in order to regulate the movement of the filament 3 according to the shapes of the bulb 2 and the filament 3 or the outer diameter R1, two or more dimples 25 may be formed as in this embodiment. In addition, the dimple 25 may not be formed.

The filament 3 is disposed in the interior 2a of the bulb 2 along the tube axis. The filament 3 is formed integrally with a coil 31, leg sections 32 and 33, and an anchor 34. The filament 3 in this embodiment is a metal wire made of tungsten.

The coil 31 is a main part of the filament 3, and is a portion that generates heat and emits a light when the heater is turned on. The coil 31 is disposed in the interior 2a of the bulb 2. The coil 31 is formed by spirally winding a metal wire. As shown in FIG. 2, the coil 31 is formed into a circular shape when seen in the tube axis direction. That is, the coil 31 is formed into a cylindrical shape.

Here, the ratio L1/L2 of the wire length L1 of the coil 31 to the effective light emission length L2 of the bulb 2 (hereinafter referred to as "length ratio L1/L2") preferably satisfies the following formula: $0.33 \leq L1/L2 \leq 20.1$, more preferably satisfies the following formula: $0.33 \leq L1/L2 \leq 19.7$. Incidentally, the "wire length L1 of the coil 31" as used herein refers to a wire length when the coil 31 is unwound into a linear form. If the length ratio L1/L2 is less than 13.0, the illuminance exceeds 130 (lx), which is the upper limit illuminance for the anti-glare property in visual evaluation so that the glare increases, and therefore, such a length ratio is not preferred. On the other hand, if the length ratio L1/L2 is more than 20.1, an operation for attaching the anchor 34 to the coil 31 becomes difficult, and therefore, such a length ratio is not preferred. Incidentally, the effective light emission length L2 in this embodiment is a length of the cylindrical section 21 in the tube axis direction.

As shown in FIG. 1, the leg sections 32 and 33 are disposed at both ends of the coil 31 in the tube axis direction, and partially embedded in the seal sections 22 and 23, respectively. The leg sections 32 and 33 are portions that supply electric power to the coil 31. The leg sections 32 and 33 are connected through one end thereof to both ends of the coil 31, respectively, and are electrically connected through the other end thereof to metal foils 61 and 62, respectively.

As shown in FIGS. 1 and 2, the anchor 34 is a member that supports the coil 31 against the inner wall 2c of the bulb 2, and is a support member for the coil 31. The anchor 34 is configured as a separate member from the coil 31 and the legs sections 32 and 33. As shown in FIG. 2, the anchor 34 is connected to the coil 31 by winding one end thereof around the coil 31 several turns. The anchor 34 is configured such that the central portion thereof is formed toward the inner wall 2c of the bulb 2. The anchor 34 is formed into an arc shape along the inner wall 2c when the other end thereof is seen in the tube axis direction. A plurality of anchors 34 are provided in the tube axis direction so as to maintain one or more predetermined pitches and support the coil 31 of the filament 3 so that the coil 31 is disposed substantially at the center of the interior 2a of the bulb 2. According to this, the coil 31 can be prevented from entirely coming into contact with or coming closer to the inner wall 2c of the bulb 2.

Here, the ratio R1/R2 of the outer diameter R1 of the coil 31 to the outer diameter R2 of the anchor 34 (hereinafter referred to as "outer diameter ratio R1/R2") preferably satisfies the following formula: $0.33 \leq R1/R2 \leq 0.55$, more preferably satisfies the following formula: $0.33 \leq R1/R2 \leq 0.52$. If the outer diameter ratio R1/R2 is less than 0.33, the illuminance exceeds 130 (lx), which is the upper limit illuminance for the anti-glare property in visual evaluation so that the glare increases, and therefore, such an outer diameter ratio is not preferred. On the other hand, if the outer diameter ratio R1/R2 is more than 0.55, an operation for attaching the anchor 34 to the coil 31 becomes difficult, and therefore, such an outer diameter ratio is not preferred.

The gas 4 is filled in the interior 2a of the bulb 2. The gas 4 in this embodiment is argon gas at about 0.8 atm containing a trace amount of dibromomethane ($CH_2Br_2$). Incidentally, the gas 4 is preferably a gas having low thermal conductivity, and may be configured to contain one type of gas selected from krypton, xenon, argon, neon, and the like, or two or more types of gases in combination. Further, the gas 4 may be configured to contain one type of halogen selected from bromine, iodine, and the like, or two or more types of halogens in combination.

As shown in FIGS. 1 and 2, the multilayer film 5 is formed on the outer surface 2b of the bulb 2. The multilayer film 5 is formed in a region of the cylindrical section 21 in the outer surface 2b. The multilayer film 5 is formed to have an average visible light transmittance in the wavelength range of 380 nm to 780 nm of 24% or less. Further, the multilayer film 5 is formed such that the average visible light transmittance in the wavelength range of 380 nm to 780 nm of the bulb 2 and the multilayer film 5 formed on the outer surface 2b of the bulb 2 in combination is 22% or less. The multilayer film 5 in this embodiment is composed of 10 layers on the outer surface 2b by alternately depositing silicon oxide and iron oxide. The multilayer film 5 is visually recognized as gold when the heater 1 is turned off.

Here, the "average visible light transmittance in the wavelength range of 380 nm to 780 nm of the bulb 2 and the multilayer film 5 formed on the outer surface 2b of the bulb 2 in combination" means as follows. For example, with respect to the bulb 2 with the multilayer film 5 formed on the outer surface 2b thereof, the transmittance in the wavelength range of 380 nm to 780 nm in the visible light wavelength region was measured in 5 nm increments using a spectrophotometer V-570 manufactured by JASCO Corporation, an average of the transmittance in the wavelength range of 380 nm to 780 nm is obtained, and the thus obtained average is referred to as the average visible light transmittance in the wavelength range of 380 nm to 780 nm. Further, the "average visible light transmittance in the wavelength range of 380 nm to 780 nm of the multilayer film 5" can be calculated by, for example, the following method. Firstly, the bulb 2 and a glass having substantially the same transmittance, thickness, and the like as the bulb 2 are used as the measurement samples, and the transmittance in the wavelength range of 380 nm to 780 nm in the visible light wavelength region of the bulb 2 (or the glass having substantially the same properties) was measured in 5 nm increments using a spectrophotometer V-570 manufactured by JASCO Corporation. Secondly, based on the "date of the transmittance in the wavelength range of 380 nm to 780 nm in the visible light wavelength region of the bulb 2 (or the glass having substantially the same properties)" and the previously obtained "date of the transmittance in the wavelength range of 380 nm to 780 nm in the visible light wavelength region of the bulb 2 and the multilayer film 5 formed on the outer surface 2b of the bulb 2 in combination", the "date of the transmittance in the wavelength range of 380 nm to 780 nm in the visible light wavelength region of the multilayer film 5" can be calculated. From this "date of the transmittance in the wavelength range of 380 nm to 780 nm in the visible light wavelength region of the multilayer film 5", an average in the wavelength range of 380 nm to 780 nm was obtained, and the thus obtained average value was referred to as the "average visible light transmittance in the wavelength range of 380 nm to 780 nm of the multilayer film 5".

If the average visible light transmittance in the wavelength range of 380 nm to 780 nm of the multilayer film 5 is more than 24% (the average visible light transmittance in the wavelength range of 380 nm to 780 nm of the bulb 2 and the multilayer film 5 formed on the outer surface 2b of the bulb 2 in combination is more than 22%), the glare in visual evaluation increases, and therefore, such a transmittance is not preferred. On the other hand, when the average visible light transmittance in the wavelength range of 380 nm to 780 nm of the multilayer film 5 is 24% or less (the average visible light transmittance in the wavelength range of 380 nm to 780 nm of the bulb 2 and the multilayer film 5 formed on the outer surface 2b of the bulb 2 in combination is 22% or less), the glare in visual evaluation decreases. In particular, when the average visible light transmittance in the wavelength range of 380 nm to 780 nm of the multilayer film 5 is 21% or less (the average visible light transmittance in the wavelength range of 380 nm to 780 nm of the bulb 2 and the multilayer film 5 formed on the outer surface 2b of the bulb 2 in combination is 19% or less), the glare in visual evaluation is not felt.

As shown in FIG. 1, the metal foils 61 and 62 are connected through one end thereof to the leg sections 32 and 33 of the filament 3, respectively, and are connected through the other end thereof to outer leads 71 and 72, respectively. The metal foils 61 and 62 are embedded in the seal sections 22 and 23, respectively. The metal foils 61 and 62 in this embodiment are each a molybdenum foil, and are disposed along the plate-shaped surfaces of the seal sections 22 and 23, respectively.

The outer leads 71 and 72 connect an external power source (not shown) to the metal foils 61 and 62, respectively. The outer leads 71 and 72 are connected through one end thereof to the metal foils 61 and 62, respectively, and the other ends thereof are exposed to the outside of the bulb 2. The outer leads 71 and 72 are partially embedded in the seal sections 22 and 23, respectively. Each of the other ends of the outer leads 71 and 72 is inserted into a connector (not shown) along with the seal section 22 or 23, and is electrically connected to a cable (not shown) provided for the connector, and connected to a power source through the cable. The outer leads 71 and 72 in this embodiment are each a molybdenum rod.

Next, a process for producing the heater 1 will be described. FIG. 3 is a front view showing the bulb. FIG. 4 is a front view showing the filament. FIGS. 5 to 8 are views showing a process for producing the heater according to an embodiment.

As shown in FIG. 3, the entire bulb 2 is the cylindrical section 21 before processing, and the exhaust tube 24' communicates the interior 2a to the outside of the bulb 2. Further, as shown in FIG. 4, to the filament 3, the metal foils 61 and 62 and the outer leads 71 and 72 are connected in advance by welding or the like.

First, as shown in FIG. 5, the filament 3 is inserted into the interior 2a of the bulb 2. At this time, the filament 3 is inserted into the interior 2a of the bulb 2 such that the metal foils 61 and 62 are disposed at positions where the seal portions of the seal sections 22 and 23 are to be formed, respectively.

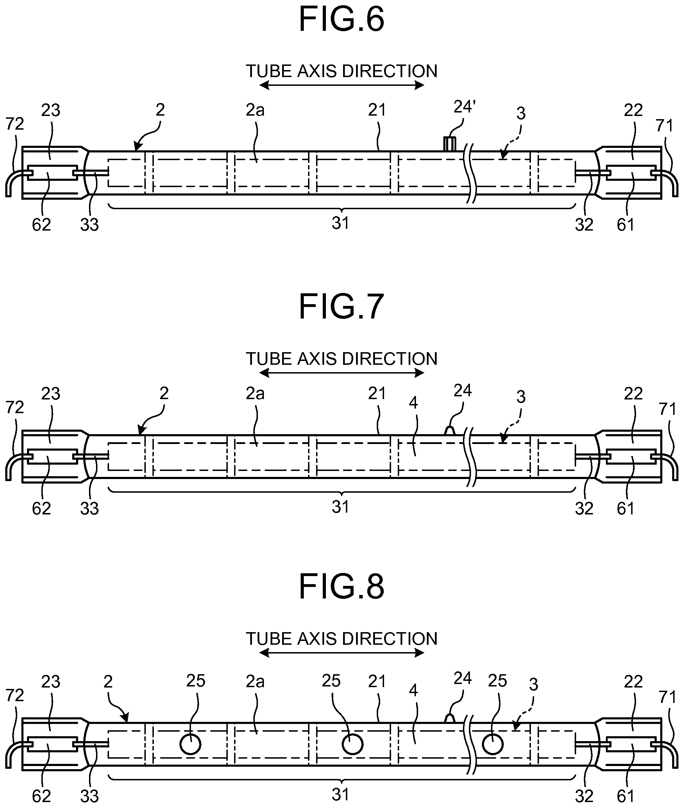

Subsequently, as shown in FIG. 6, the both ends of the bulb 2 are melted by a gas burner (not shown) and pinched by a pincher (not shown), whereby the seal sections 22 and 23 are formed. According to this, the coil 31 of the filament 3 is housed in the cylindrical section 21.

Subsequently, the gas in the cylindrical section 21 is discharged and the gas 4 is enclosed therein through the exhaust tube 24'.

Subsequently, as shown in FIG. 7, the exhaust tube 24' is burnt off by melting the tube by a gas burner (not shown) to hermetically close the cylindrical section 21, whereby the gas 4 is filled in the interior 2a of the bulb 2.

Subsequently, as shown in FIG. 8, a portion of the bulb 2 is softened by a gas burner (not shown) at a position facing the coil 31 of the filament 3, whereby the dimple 25 is formed.

Subsequently, the multilayer film 5 is formed on the outer surface 2b of the bulb 2. Here, in a region of the cylindrical section 21 in the outer surface 2b, silicon oxide is deposited to form first, third, fifth, seventh, and ninth layers from the bulb 2 side, and iron oxide is deposited to form second, fourth, sixth, eighth, and tenth layers therefrom, whereby the multilayer film 5 composed of 10 layers is formed. By doing this, the heater 1 shown in FIG. 1 is produced.

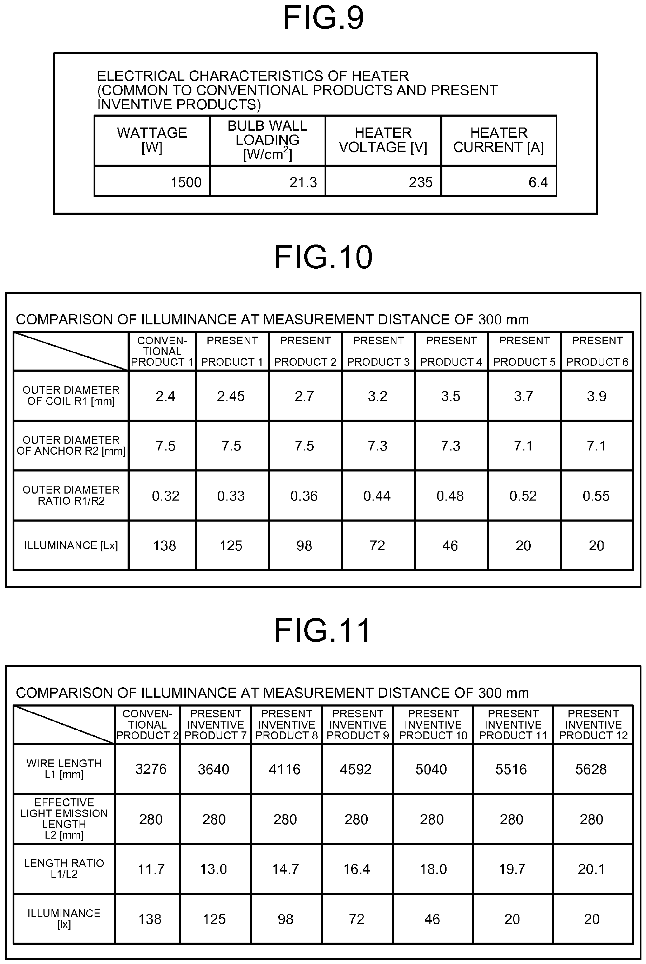

Hereinafter, the test results of the heaters 1 and conventional products will be shown. FIG. 9 is an explanatory view showing electrical characteristics of the heater. FIGS. 10 and 11 are explanatory views showing comparison of illuminance. Incidentally, the illuminance is an illuminance when the electric power of the heater is 1500 W, and the measurement distance from the heater is 300 mm, and specifically, the measurement is performed using a color illuminometer CL-200 manufactured by Konica Minolta, Inc. "Present Product 1" to "Present Product 6" are not embodiments of the invention. "Present Product 1" to "Present Inventive Product 12", each of which is the heater 1, and "Conventional Product 1", and "Conventional Product 2", each have a total length of 337 mm, a tube diameter DO of 10 mm, an inner diameter DI of 8 mm, and an effective light emission length L2 of 280 mm. Further, as shown in FIG. 9, when the electric power of the heater is 1500 W, the bulb wall loading is 21.3 W/cm$^2$, the voltage of the heater is 235 V, and the current of the heater is 6.4 A. Incidentally, the bulb wall loading is a value obtained by dividing the electric power of the heater by the inner surface area of the bulb 2, and the inner surface area of the bulb 2 can be obtained according to the following formula: inner diameter DI (mm) x 3.14 (pi) x effective light emission length L2 (mm).

In "Present Product 1" to "Present Product 6", the coil 31 of the filament 3 is a coil obtained by spirally winding a metal wire having a wire length L1 of 6076 mm and a wire diameter of 0.358 mm such that the outer diameter R1 is in the range of 2.45 mm to 3.9 mm, the outer diameter R2 of the anchor 34 is 7.3 ± 0.2 mm, and the multilayer film 5 is composed of 10 layers (the first, third, fifth, seventh, and ninth layers each have a thickness of 0.7 μm and are made of silicon oxide, the second, fourth, sixth, eighth, and tenth layers each have a thick-

ness of 0.6 μm and are made of iron oxide, the average visible light transmittance in the wavelength range of 380 nm to 780 nm of the multilayer film 5 is 21%, and the average visible light transmittance in the wavelength range of 380 nm to 780 nm of the bulb 2 and the multilayer film 5 formed on the outer surface 2b of the bulb 2 in combination is 19%). In "Present Product 1", the outer diameter R1 of the coil 31 is 2.45 mm and the outer diameter R2 of the anchor 34 is 7.5 mm, in "Present Inventive Product 2", the outer diameter R1 of the coil 31 is 2.7 mm and the outer diameter R2 of the anchor 34 is 7.5 mm, in "Present Product 3", the outer diameter R1 of the coil 31 is 3.2 mm and the outer diameter R2 of the anchor 34 is 7.3 mm, in "Present Product 4", the outer diameter R1 of the coil 31 is 3.5 mm and the outer diameter R2 of the anchor 34 is 7.3 mm, in "Present Product 5", the outer diameter R1 of the coil 31 is 3.7 mm and the outer diameter R2 of the anchor 34 is 7.1 mm, and in "Present Inventive Product 6", the outer diameter R1 of the coil 31 is 3.9 mm and the outer diameter R2 of the anchor 34 is 7.1 mm. Incidentally, in "Present Product 1" to "Present Product 6", the length ratio L1/L2 is 21.7.

In "Present Inventive Product 7" to "Present Inventive Product 12", the coil 31 of the filament 3 is a coil obtained by spirally winding a metal wire having a wire diameter of 0.358 mm and a wire length L1 in the range of 3640 mm to 5628 mm such that the outer diameter R1 is 3.7 mm, the outer diameter R2 of the anchor 34 is 7.1 mm, and the multilayer film 5 is composed of 10 layers (the first, third, fifth, seventh, and ninth layers each have a thickness of 0.7 μm and are made of silicon oxide, the second, fourth, sixth, eighth, and tenth layers each have a thickness of 0.6 μm and are made of iron oxide, the average visible light transmittance in the wavelength range of 380 nm to 780 nm of the multilayer film 5 is 21%, and the average visible light transmittance in the wavelength range of 380 nm to 780 nm of the bulb 2 and the multilayer film 5 formed on the outer surface 2b of the bulb 2 in combination is 19%). In "Present Inventive Product 7", the wire length L1 of the coil 31 is 3640 mm, in "Present Inventive Product 8", the wire length L1 of the coil 31 is 4116 mm, in "Present Inventive Product 9", the wire length L1 of the coil 31 is 4592 mm, in "Present Inventive Product 10", the wire length L1 of the coil 31 is 5040 mm, in "Present Inventive Product 11", the wire length L1 of the coil 31 is 5516 mm, and in "Present Inventive Product 12", the wire length L1 of the coil 31 is 5628 mm. Incidentally, in "Present Inventive Product 7" to "Present Inventive Product 12", the outer diameter ratio R1/R2 is 0.52.

In "Conventional Product 1", the coil of the filament is a turn coil obtained by winding a metal wire having a wire length of 6070 mm and a wire diameter of 0.307 mm such that the outer diameter of the coil is 2.4 mm, the outer diameter of the anchor 34 is 7.5 mm, and the multilayer film 5 is composed of 10 layers (the first, third, fifth, seventh, and ninth layers each have a thickness of 0.7 μm and are made of silicon oxide, the second, fourth, sixth, eighth, and tenth layers each have a thickness of 0.6 μm and are made of iron oxide, the average visible light transmittance in the wavelength range of 380 nm to 780 nm of the multilayer film 5 is 21%, and the average visible light transmittance in the wavelength range of 380 nm to 780 nm of the bulb 2 and the multilayer film 5 formed on the outer surface 2b of the bulb 2 in combination is 19%). Incidentally, in "Conventional Product 1", the length ratio is 21.7.

In "Conventional Product 2", the coil of the filament is a turn coil obtained by winding a metal wire having a wire length of 3276 mm and a wire diameter of 0.307 mm such that the outer diameter of the coil is 3.7 mm, the outer diameter of the anchor 34 is 7.1 mm, and the multilayer film 5 is composed of 10 layers (the first, third, fifth, seventh, and ninth layers each have a thickness of 0.7 μm and are made of silicon oxide, the second, fourth, sixth, eighth, and tenth layers each have a thickness of 0.6 μm and are made of iron oxide, the average visible light transmittance in the wavelength range of 380 nm to 780 nm of the multilayer film 5 is 21%, and the average visible light transmittance in the wavelength range of 380 nm to 780 nm of the bulb 2 and the multilayer film 5 formed on the outer surface 2b of the bulb 2 in combination is 19%). Incidentally, in "Conventional Product 2", the outer diameter ratio is 0.52.

As shown in FIG. 10, as compared with "Conventional Product 1" whose illuminance is 138 (lx), the illuminance of "Present Product 1" can be decreased to 125 (lx), the illuminance of "Present Product 2" can be decreased to 98 (lx), the illuminance of "Present Product 3" can be decreased to 72 (lx), the illuminance of "Present Product 4" can be decreased to 46 (lx), and the illuminance of "Present Product 5" and "Present Product 6" can be decreased to 20 (lx). That is, with respect to the illuminance of "Conventional Product 1", the illuminance can be decreased to about 91% in the case of "Present Product 1", about 71% in the case of "Present Product 2, about 52% in the case of "Present Product 3", about 33% in the case of "Present Product 4", about 14% in the case of "Present Product 5", and about 14% in the case of "Present Product 6". Therefore, in "Present Product 1" to "Present Product 6", the anti-glare property can be improved by setting the outer diameter ratio R1/R2 within the following range: 0.33 ≤ R1/R2 ≤ 0.55. Here, when the illuminance is 70 (lx) or less in visual evaluation, the heater can be evaluated to be glare-free, and therefore, in "Present Product 4" to "Present Product 6", the anti-glare property can be significantly improved. Further, when the illuminance is 35 (lx) or less in visual evaluation, the heater can be evaluated to be more glare-free, and therefore, in "Present Product 5" and "Present Product 6", the anti-glare property can be remarkably improved.

As shown in FIG. 11, as compared with "Conventional Product 2" whose illuminance is 138 (lx), the illuminance of "Present Inventive Product 7" can be decreased to 125 (lx), the illuminance of "Present Inventive Product 8" can be decreased to 98 (lx), the illuminance of "Present Inventive Product 9" can be decreased to 72 (lx), the illuminance of "Present Inventive Product 10" can be decreased to 46 (lx), and the illuminance of "Present Inventive Product 11" and "Present Inventive Product 12" can be decreased to 20 (lx). That is, with respect to the illuminance of "Conventional Product 2", the illuminance can be decreased to about 91% in the case of "Present Inventive Product 7", about 71% in the case of "Present Inventive Product 8, about 52% in the case of "Present Inventive Product 9", about 33% in the case of "Present Inventive Product 10", about 14% in the case of "Present Inventive Product 11", and about 14% in the case of "Present Inventive Product 12". Therefore, in "Present Inventive Product 7" to "Present Inventive Product 12", the anti-glare property can be improved by setting the length ratio L1/L2 within the following range: $0.33 \leq L1/L2 \leq 20.1$. Here, when the illuminance is 70 (lx) or less in visual evaluation, the heater can be evaluated to be glare-free, and therefore, in "Present Inventive Product 10" to "Present Inventive Product 12", the anti-glare property can be significantly improved. Further, when the illuminance is 35 (lx) or less in visual evaluation, the heater can be evaluated to be more glare-free, and therefore, in "Present Inventive Product 11" and "Present Inventive Product 12", the anti-glare property can be remarkably improved.

As described above, by setting the outer diameter ratio R1/R2 within the following range: $0.33 \leq R1/R2 \leq 0.55$, or by setting the length ratio L1/L2 within the following range: $13.0 \leq L1/L2 \leq 20.1$, the illuminance can be decreased. Accordingly, in the heater 1 of this embodiment, the anti-glare property can be improved.

Further, since the multilayer film 5 having an average visible light transmittance in the wavelength range of 380 nm to 780 nm of 24% or less is formed on the outer surface 2b of the bulb 2, when the heater 1 is turned off, it is difficult to visually recognize the bulb 2 and the filament 3 directly from the outside. In addition, the multilayer film 5 is visually recognized as gold when the heater 1 is turned off. The heater 1 of this embodiment can improve the designability when the heater 1 is turned off.

Incidentally, in the above embodiment, for the multilayer film 5, silicon oxide and iron oxide are used, however, the materials are not limited thereto. Since the multilayer film 5 may be any as long as the average visible light transmittance in the wavelength range of 380 nm to 780 nm of the multilayer film 5 is 24% or less, the multilayer film 5 may be formed by depositing other materials. Further, any materials may be used as long as the average visible light transmittance in the wavelength range of 380 nm to 780 nm of the bulb 2 and the multilayer film 5 formed on the outer surface 2b of the bulb 2 in combination is 22% or less. For example, the bulb 2 is formed from quartz glass containing copper oxide or tin oxide, that is, a so-called ruby tube, and the multilayer film 5 may be formed on the outside of the bulb 2 such that the average visible light transmittance in the wavelength range of 380 nm to 780 nm of the bulb 2 and the multilayer film 5 formed on the outer surface 2b of the bulb 2 in combination is 22% or less.

In addition, in the above embodiment, the multilayer film 5 is composed of 10 layers, but the number of layers is not limited thereto. The multilayer film 5 may be any as long as the average visible light transmittance in the wavelength range of 380 nm to 780 nm of the multilayer film 5 is 24% or less, and therefore, the multilayer film 5 may be composed of 10 layers or less, or 10 layers or more.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made. The accompanying claims and their equivalents are intended to cover such forms or modifications.

## Claims

1. A heater (1), comprising:

   a bulb (2) including a cylindrical section (21) ; a filament disposed in the interior of the bulb along the tube axis;
   a gas (4) filled in the interior of the bulb; and a multilayer films (5) formed on the outer surface of the bulb, and having an average visible light transmittance in the wavelength range of 380 nm to 780 nm of 24% or less, wherein the filament includes a coil (31) wound spirally, which is not a flower-winding coil, and an anchor supporting the coil against the inner wall of the bulb, and the ratio R1/R2 of the outer diameter R1 of the coil to the outer diameter R2 of the anchor satisfies the following formula: $0.33 \leq R1/R2 \leq 0.55$, the heater being **characterized in that** the ratio L1/L2 of the wire length L1 of the coil when the coil is unwound into a linear form to the effective light emission length L2 of the cylindrical section in the tube axis direction satisfies the following formula: $0.33 \leq L1/L2 \leq 20.1$.

2. The heater according to claim 1, wherein the average visible light transmittance in the wavelength range of 380 nm to 780 nm of the bulb and the multilayer film formed on the outer surface of the bulb in combination is 22% or less.

3. The heater according to claim 1 or 2, wherein the bulb includes a dimple (25) protruding toward the interior thereof on the outer surface (2b) of the bulb.

**4.** The heater according to any one of claims 1 to 3, wherein

the anchor is formed into an arc shape along the inner wall (2c) of the bulb when

seen in the tube axis direction, and a plurality of anchors are provided in the tube axis direction so as to maintain one or more predetermined pitches and support the coil so that the coil is disposed substantially at the center of the interior of the bulb.


**Patentansprüche**

**1.** Heizer (1), umfassend:

einen Kolben (2) mit einem zylindrischen Abschnitt (21);
ein Filament, das im Inneren des Kolbens entlang der Röhrenachse angeordnet ist;
ein im Inneren des Kolbens eingefülltes Gas (4); und
einen Mehrschichtfilm (5), der auf der Außenfläche des Kolbens ausgebildet ist und eine durchschnittliche Durchlässigkeit für sichtbares Licht im Wellenlängenbereich von 380 nm bis 780 nm von maximal 24% aufweist,
wobei
das Filament eine spiralförmig gewickelte Wendel (31) aufweist, die keine Blumenwendel ist, und einen Anker, der die Wendel an der Innenwand des Kolbens abstützt, und
das Verhältnis R1/R2 des Außendurchmessers R1 der Wendel zum Außendurchmesser R2 des Ankers folgende Formel erfüllt: $0.33 \leq R1/R2 \leq 0,55$, wobei der Heizer **dadurch gekennzeichnet ist, dass** das Verhältnis L1/L2 der Drahtlänge L1 der Wendel, wenn die Wendel in eine lineare Form abgewickelt ist, zur wirksamen Lichtausstrahlungslänge L2 des zylindrischen Abschnitts in der Röhrenachsenrichtung folgende Formel erfüllt:

$$13,0 \leq L1/L2 \leq 20,1.$$

**2.** Heizer nach Anspruch 1, wobei die durchschnittliche Durchlässigkeit für sichtbares Licht im Wellenlängenbereich von 380 nm bis 780 nm des Kolbens und des Mehrschichtfilms, der auf der Außenfläche des Kolbens ausgebildet ist, in Kombination maximal 22 % beträgt.

**3.** Heizer nach Anspruch 1 oder 2, wobei der Kolben eine Vertiefung (25) aufweist, die auf der Außenfläche (2b) des Kolbens ins Innere davon ragt.

**4.** Heizer nach einem der Ansprüche 1 bis 3, wobei der Anker entlang der Innenwand (2c) des Kolbens in Röhrenachsenrichtung betrachtet bogenförmig geformt ist und eine Vielzahl von Ankern in der Röhrenachsenrichtung vorgesehen sind, damit ein oder mehrere vorher festgelegte Abstände eingehalten werden und die Wendel so gestützt wird, dass die Wendel im Wesentlichen in der Mitte des Innenraums des Kolbens angeordnet ist.


**Revendications**

**1.** Dispositif de chauffage (1), comprenant :

une ampoule (2) incluant une section cylindrique (21) ;
un filament disposé dans l'intérieur de l'ampoule le long de l'axe de tube ;
un gaz (4) rempli à l'intérieur de l'ampoule ; et
un film multicouches (5) formé sur la surface extérieure de l'ampoule, et ayant
un coefficient de transmission de la lumière visible moyen dans la plage de longueur d'onde de 380 nm à 780 nm de 24 % ou moins, dans lequel
le filament inclut une bobine (31) enroulée en spirale, qui n'est pas une bobine à enroulement en fleur, et un ancrage supportant la bobine contre la paroi intérieure de l'ampoule, et le rapport R1/R2 du diamètre extérieur R1 de la bobine au diamètre extérieur R2 de l'ancrage satisfait la formule suivante : $0.33 \leq R1/R2 \leq 0,55$, le dispositif de chauffage étant **caractérisé en ce que** le rapport L1/L2 de la longueur de fil L1 de la bobine lorsque la bobine est déroulée en une forme linéaire à la longueur d'émission de lumière effective L2 de la section cylindrique dans la direction de l'axe de tube satisfait la formule suivante :

$$13 \leq R1/R2 \leq 20,1.$$

**2.** Dispositif de chauffage selon la revendication 1, dans lequel
le coefficient de transmission de la lumière visible moyen dans la plage de longueur d'onde de 380 nm à 780 nm de l'ampoule et du film multicouches formé sur la surface extérieure de l'ampoule en combinaison est de 22 % ou moins.

**3.** Dispositif de chauffage selon la revendication 1 ou 2, dans lequel l'ampoule inclut une encoche (25) en saillie vers l'intérieur de celle-ci sur la surface extérieure (2b) de l'ampoule.

**4.** Dispositif de chauffage selon l'une quelconque des revendications 1 à 3, dans lequel
l'ancrage est formé en arc le long de la paroi intérieure (2c) de l'ampoule, lorsque vu dans la direction de l'axe de tube, et une pluralité d'ancrages est prévue dans la direction de l'axe de tube de façon à maintenir un ou plus de pas prédéterminés et supporter la bobine de façon à ce que la bobine soit disposée essentiellement au centre de l'intérieur de l'ampoule.

# FIG.1

TUBE AXIS DIRECTION

# FIG.2

CIRCUM-
FERENTIAL
DIRECTION

# FIG.3

TUBE AXIS DIRECTION

# FIG.4

TUBE AXIS DIRECTION

# FIG.5

TUBE AXIS DIRECTION

# FIG.6

TUBE AXIS DIRECTION

72 23 2 2a 21 24' 3 22 71

62 33 31 32 61

# FIG.7

TUBE AXIS DIRECTION

72 23 2 2a 21 4 24 3 22 71

62 33 31 32 61

# FIG.8

TUBE AXIS DIRECTION

72 23 2 25 2a 25 21 4 24 25 3 22 71

62 33 31 32 61

# FIG.9

| ELECTRICAL CHARACTERISTICS OF HEATER (COMMON TO CONVENTIONAL PRODUCTS AND PRESENT INVENTIVE PRODUCTS) | | | |
|---|---|---|---|
| WATTAGE [W] | BULB WALL LOADING [W/cm$^2$] | HEATER VOLTAGE [V] | HEATER CURRENT [A] |
| 1500 | 21.3 | 235 | 6.4 |

# FIG.10

COMPARISON OF ILLUMINANCE AT MEASUREMENT DISTANCE OF 300 mm

| | CONVEN-TIONAL PRODUCT 1 | PRESENT PRODUCT 1 | PRESENT PRODUCT 2 | PRESENT PRODUCT 3 | PRESENT PRODUCT 4 | PRESENT PRODUCT 5 | PRESENT PRODUCT 6 |
|---|---|---|---|---|---|---|---|
| OUTER DIAMETER OF COIL R1 [mm] | 2.4 | 2.45 | 2.7 | 3.2 | 3.5 | 3.7 | 3.9 |
| OUTER DIAMETER OF ANCHOR R2 [mm] | 7.5 | 7.5 | 7.5 | 7.3 | 7.3 | 7.1 | 7.1 |
| OUTER DIAMETER RATIO R1/R2 | 0.32 | 0.33 | 0.36 | 0.44 | 0.48 | 0.52 | 0.55 |
| ILLUMINANCE [Lx] | 138 | 125 | 98 | 72 | 46 | 20 | 20 |

# FIG.11

COMPARISON OF ILLUMINANCE AT MEASUREMENT DISTANCE OF 300 mm

| | CONVEN-TIONAL PRODUCT 2 | PRESENT INVENTIVE PRODUCT 7 | PRESENT INVENTIVE PRODUCT 8 | PRESENT INVENTIVE PRODUCT 9 | PRESENT INVENTIVE PRODUCT 10 | PRESENT INVENTIVE PRODUCT 11 | PRESENT INVENTIVE PRODUCT 12 |
|---|---|---|---|---|---|---|---|
| WIRE LENGTH L1 [mm] | 3276 | 3640 | 4116 | 4592 | 5040 | 5516 | 5628 |
| EFFECTIVE LIGHT EMISSION LENGTH L2 [mm] | 280 | 280 | 280 | 280 | 280 | 280 | 280 |
| LENGTH RATIO L1/L2 | 11.7 | 13.0 | 14.7 | 16.4 | 18.0 | 19.7 | 20.1 |
| ILLUMINANCE [lx] | 138 | 125 | 98 | 72 | 46 | 20 | 20 |